# DEMANDE DE BREVET EUROPEEN

(11) **EP 1 178 328 A1**
(43) Date de publication de la demande: **06.02.2002**
(21) Numéro de dépôt: 00810692.4
(22) Date de dépôt: 31.07.2000
(51) Int. Cl.: G01S 3/80, G01S 5/20, G01S 15/06, H04B 11/00

(54) **Dispositif acoustique de navigation pour la plongée sousmarine**

(71) Demandeur: Xios S.A., 1202 Genève (CH)
(72) Inventeur: Brizard, Thierry, Sterling Forest, NY 10979 (US)
(74) Mandataire: Savoye, Jean-Paul

(57) **Abrégé**

Le dispositif acoustique comporte une source acoustique (1) localisé sur le bateau de soutien (2) dont les émissions d'impulsions acoustiques (12) sont cadencées par une base de temps de précision (9). Chaque plongeur porte un ensemble de réception et de signalisation (3) alimenté par batterie (10), qui comporte une base de temps (4), au moins trois capteurs acoustiques non alignés (5), une électronique de conditionnement et de numérisation (6) des signaux acoustiques reçus et un processeur (7). Pour chaque impulsion acoustique (12) émise par la source acoustique (1), la direction et la distance du plongeur par rapport au bateau sont calculés par le processeur (7) qui les affiche sur les moyens de signalisation (8) de l'ensemble de réception et de signalisation (3). Le dispositif distinguer plusieurs groupes de plongeurs. Il comprend aussi la possibilité de recevoir des messages d'alerte et d'effectuer les fonctions d'un ordinateur de plongée.

## Description

La présente invention se rapporte à un dispositif acoustique de navigation permettant à un plongeur sous-marin, plongeant seul ou en groupe, de connaître en permanence sa position (direction et distance) par rapport au bateau de soutien d'où la plongée s'effectue. Ce dispositif n'agit pas à la demande mais de manière automatique et permanente sans intervention du plongeur. Le dispositif permet aussi de recevoir des messages envoyés du bateau, notamment des messages d'alerte et peut aussi intégrer une fonction "ordinateur de plongée". Plusieurs dispositifs peuvent être déployés sur le même sîte par plusieurs groupes de plongeurs sans se contrarier.

La plongée sous marine est une activité qui compte de plus en plus d'adeptes mais qui reste cependant cataloguée comme étant un sport à risques. Aujourd'hui plus que jamais l'amélioration de la sécurité du plongeur représente un souci majeur. Une grande partie des accidents surviennent lorsque le plongeur se perd et devient incapable de regagner le bateau de soutien. L'effet de panique consécutif à la prise de conscience de la désorientation a souvent des conséquences tragiques. Il est donc important de pouvoir disposer d'un système autonome qui permette au plongeur de connaître automatiquement sa position vis-à-vis du bateau de soutien par simple affichage. Le même souci de sécurité conduit à rechercher la capacité de transmettre instantanément au plongeur un message d'alerte lui demandant, par exemple, de remonter immédiatement à la surface dans le cas d'une situation d'urgence.

Quelques systèmes de navigation sont aujourd'hui commercialisés. Tous comprennent une source acoustique immergée sous le bateau associée à un récepteur directif de type torche tenu en main par le plongeur. Ce dernier doit balayer l'espace avec ce récepteur torche pour intercepter le signal issu de la source acoustique, trouvant ainsi sa direction de retour.

Ces systèmes ne répondent qu'imparfaitement au double besoin de navigation et de messagerie d'urgence: aucun ne permet de calculer la direction de manière complètement automatique: le balayage de l'espace pour trouver la direction requiert toute la concentration du plongeur et a toutes les chances d'augmenter son stress de manière significative si le signal n'est pas intercepté rapidement.

Par ailleurs, la plupart des dispositifs commercialisés ne permettent pas le déploiement simultané de plusieurs systèmes sur le même site. Cette fonction est toutefois proposée par quelques appareils haut de gamme, mais fortement limitée par un trop petit nombre de canaux devant être souvent sélectionnés manuellement.

Enfin, le prix des appareils les plus perfectionnés est élevé, ce qui limite leur diffusion.

### Description de l'invention

Le but de la présente invention est de remédier, au moins en partie, aux inconvénients sus mentionnés: obligation faite au plongeur de rechercher sa direction manuellement par "balayage", limitation du nombre de systèmes pouvant être déployés sur un même sîte, sélection manuelle des canaux de fonctionnement et prix élevé.

A cet effet, cette invention a pour objet un dispositif acoustique de navigation pour la plongée selon la revendication 1.

Le dispositif selon l'invention met en oeuvre un ensemble source acoustique plus récepteurs multiples aux caractéristiques radicalement différentes des produits actuellement commercialisés.

La conception du dispositif permet de réduire suffisamment les dimensions du récepteur pour qu'il puisse être porté au poignet du plongeur selon le principe de la montre-bracelet.

D'autres particularités et avantages de l'invention apparaîtront clairement dans la description suivante, faite à titre d'exemple non limitatif en regard des figures annexées qui représentent :
la figure 1, une illustration schématique de l'environnement sous-marin mettant en oeuvre un dispositif selon l'invention, avec une source acoustique et plusieurs récepteurs,
la figure 2, une vue synoptique d'une source acoustique selon l'invention,
la figure 3, une représentation temporelle du signal émis par la source acoustique et le principe de sa propagation omnidirectionnelle dans le milieu sous-marin,
la figure 4, une illustration schématique de l'environnement sous-marin mettant en oeuvre un dispositif selon l'invention, avec plusieurs sources et plusieurs récepteurs,
la figure 5, une vue synoptique d'un ensemble de réception et de signalisation selon l'invention,
la figure 6, une illustration du mécanisme de calcul de direction angulaire à partir de la mesure des temps de réception sur chacun des capteurs acoustiques.

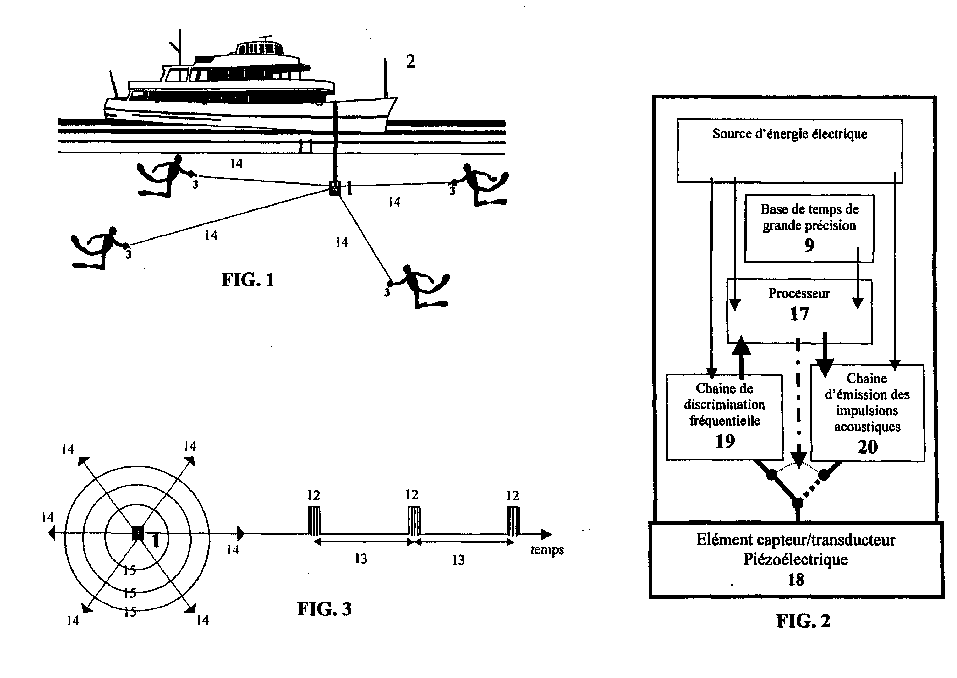

Comme représenté sur la figure 1, le dispositif se compose de deux parties principales: la source acoustique 1 immergée à partir du bateau de soutien 2 et reliée à celui-ci par un câble 11, et l'ensemble de réception et de signalisation 3 porté par chaque plongeur. Etant donné la nature passive des traitements de l'ensemble de détection et de signalisation 3 (détection, calcul de la distance et de la direction), une même source acoustique 1 peut servir à un nombre illimité de plongeurs, chacun équipé d'un ensemble de réception et de signalisation 3.

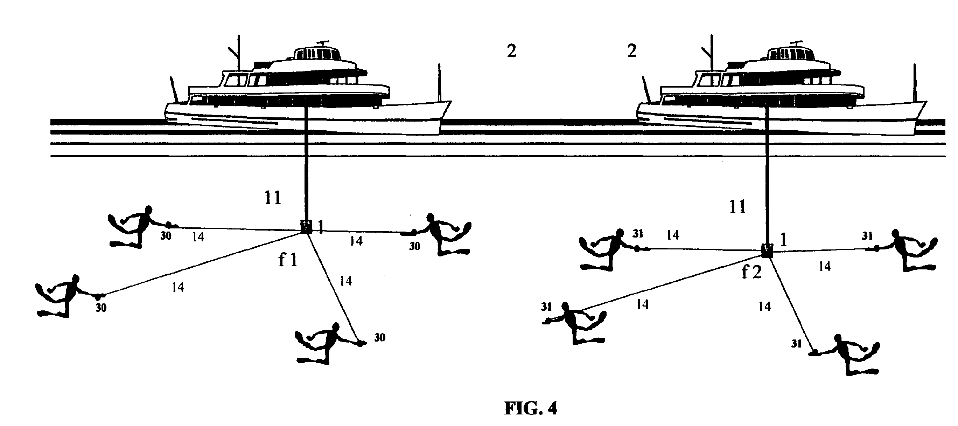

Comme représenté sur la figure 2, la source acoustique 1 comprend un élément capteur/transducteur piézoélectrique 18 pouvant soit écouter le milieu sous-marin (fonction capteur), soit produire des impulsions acoustiques 12 (fonction transducteur).

Dans sa fonction capteur, l'élément piézoélectrique 18 reçoit des signaux acoustiques du milieu sous-marin que ledit élément transmet sous forme électrique à la chaîne de discrimination fréquentielle 19. Cette chaîne 19 peut être réalisée, par exemple, au moyen d'une batterie de filtres passe-bande en parallèle dont chacun communique au processeur 17 le niveau d'énergie acoustique filtré dans sa bande propre. L'ensemble de ces informations permet audit processeur d'avoir la connaissance des canaux de fréquences libres ou occupés dans l'environnement proche de la source acoustique 1.

Dans sa fonction transducteur, l'élément piézoélectrique 18 transforme en énergie acoustique les stimulis électriques reçus de la chaîne d'émission des impulsions acoustiques 20 sous le contrôle du processeur 17 et de la base de temps de grande précision 9.

Comme représenté sur la figure 3, la source acoustique 1 émet des impulsions à fréquence pure 12, selon une cadence 13 précise, par exemple toutes les secondes, dans toutes les directions 14 de l'espace à la fois, générant des fronts de propagation sphériques 15. La cadence d'émission 13 est obtenue par comptage des oscillations d'une base de temps de grande précision 9. Si par exemple, ladite base de temps 9 fonctionne à 20 MegaHertz, une impulsion acoustique 12 sera émise chaque fois que le processeur 17 aura compté 20'000'000 oscillations, garantissant en cela la précision de la cadence 13 à une seconde, selon l'exemple. Sur intervention d'un opérateur, la source acoustique 1 peut également émettre un signal spécifique d'alerte, qui sera interprété comme tel par l'ensemble de réception et de signalisation 3.

Dès sa mise a l'eau, la fréquence des impulsions émises par la source acoustique 1 est sélectionnée automatiquement sur un canal libre parmi plusieurs canaux, par exemple huit. A cet effet, le processeur 17 active la chaîne de discrimination fréquentielle 19 au moment de l'initialisation de la source acoustique 1. Le processeur 17 est alors à même de déterminer si une autre source acoustique est active dans son voisinage immédiat. Si tel est le cas, le processeur 17 s'interdit de générer des impulsions 12 sur le canal de fréquence correspondant et choisit un autre canal "libre" pour émettre lesdites impulsions.

L'existence de plusieurs fréquences d'émission possibles permet de faire cohabiter sur un même sîte et sans risque d'interférence plusieurs groupes de plongeurs. Comme indiqué sur la figure 4, le premier groupe de plongeurs se repère par rapport à la source émettant sur la fréquence f1, leurs ensembles de réception et de signalisation 30 se calant automatiquement sur la fréquence f1 alors que le deuxième groupe de plongeurs se repère par rapport à la source f2, leurs ensembles de réception et de signalisation 31 se calant automatiquement sur la fréquence f2.

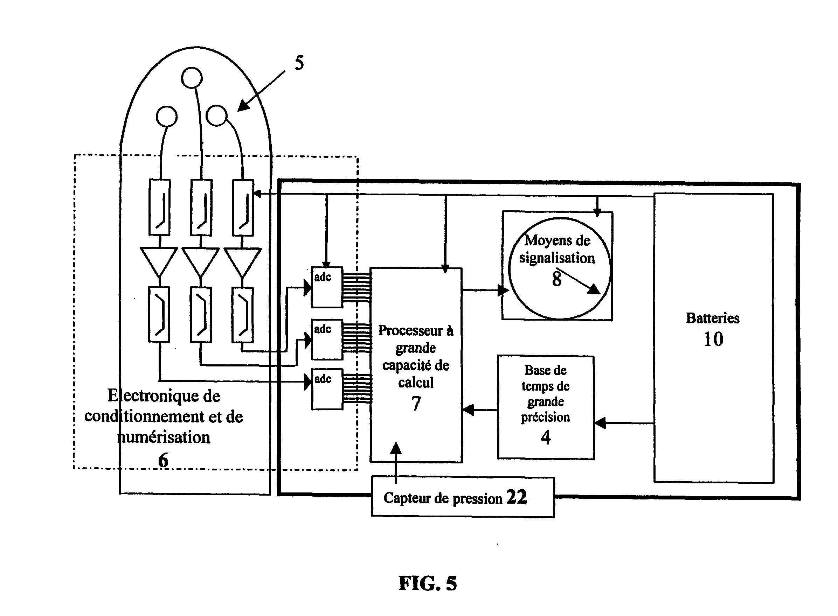

Comme indiqué sur la figure 5, l'ensemble de réception et de signalisation 3 est composé d'un ensemble d'au moins trois capteurs acoustiques non alignés 5, d'une base de temps de grande précision 4, d'une électronique de conditionnement (filtrage et amplification analogique) et de numérisation 6 associée à chaque capteur, d'un processeur à grande capacité de calcul 7 pour traîter les signaux des capteurs, des moyens de signalisation 8 et optionnellement d'un capteur de pression 22. L'ensemble de réception est alimenté par un jeu de batteries 10.

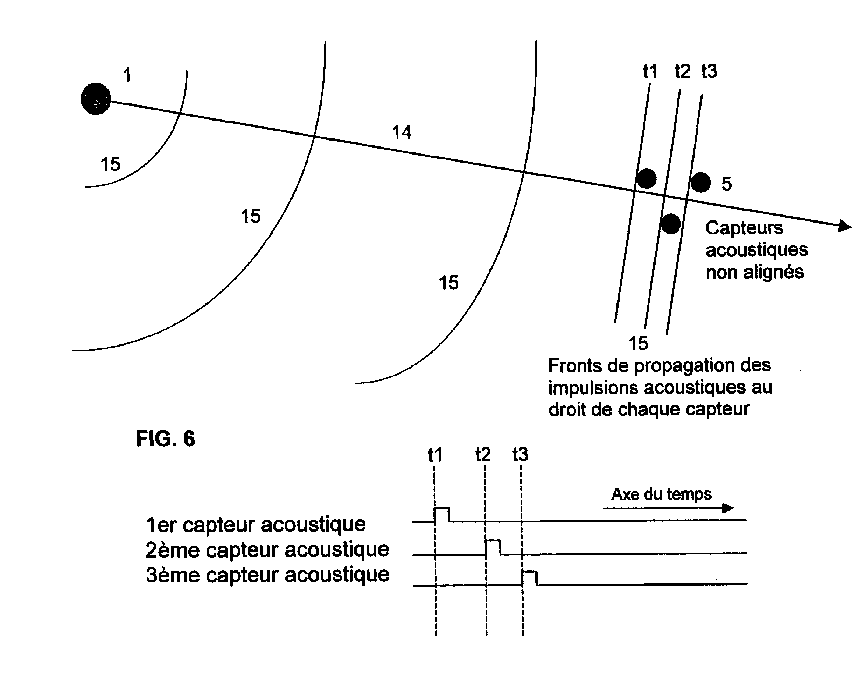

Comme indiqué sur la figure 6, les capteurs acoustiques non alignés 5 reçoivent les impulsions acoustiques 12 en provenance de la source acoustique 1 à des instants t1, t2 et t3 différents. Après numérisation des signaux acoustiques et détection desdites impulsions, le processeur 7 mesure les déphasages correspondant aux différences de marche entre les capteurs. Il détermine ensuite la position angulaire desdits capteurs par rapport à la direction de propagation 14, indicatrice de la direction du bateau de soutien 2. Cette direction est alors affichée par l'intermédiaire des moyens de signalisation 8.

Au début de la plongée, le plongeur active son ensemble de réception et de signalisation 3 au voisinage immédiat de la source acoustique 1 immergée. Les étapes de l'initialisation de l'ensemble de réception et de signalisation 3 sont les suivantes :
- Détection automatique de la fréquence d'émission de ladite source et paramétrage du logiciel du processeur 7 en conséquence,
- Génération et entretien d'une réplique synchrone de la cadence 13 des émissions de la source acoustique 1 pour le calcul de la distance. Pour éviter que cette replique ne se désynchronise de la cadence 13 pendant le temps de la plongée, l'ensemble de réception et de signalisation 3 a été conçu avec une base de temps 4 identique à la base de temps 9 utilisée dans la source acoustique 1.

La mesure de distance entre le plongeur et son bateau 2 est directement obtenue par la mesure de l'écart de temps entre la réplique synchrone représentative de l'instant d'émission T0 d'une impulsion acoustique 12 par la source 1 et l'instant de réception T de ladite impulsion par l'ensemble de réception et de signalisation 3.

Cet écart (T-T0) est alors multiplié par la vitesse de propagation du son dans l'eau (environ 1500 m/s) pour donner la distance qui est affichée à chaque réception d'une impulsion acoustique 12.

Un message d'urgence envoyé par la source acoustique 1, par exemple, comme une modification de la recurrence 13 des impulsions 12 est succeptible d'être reconnu par le processeur 7 de l'ensemble de réception et de signalisation 3, ledit processeur générant alors, sur les moyens de signalisation 8, un symbole spécifique indiquant, par exemple, au plongeur l'ordre de remonter à la surface au plus vite. Cette indication visuelle peut être avantageusement doublée d'une alarme sonore (buzzer) ou d'un système de vibreur.

L'ensemble de réception et de signalisation 3 intègre accessoirement une fonction ordinateur de plongée où les indications du capteur de pression 22 sont enregistrées de façon non volatiles sur plusieurs plongées consécutives (par exemple 10). Lors des opérations de remontée du plongeur, l'ensemble de réception et de signalisation 3 peut afficher, sur sa demande, les indications nécessaires pour effectuer ses paliers de décompression.

## Revendications

1. Dispositif acoustique de navigation pour la plongée sous-marine, comprenant une source acoustique (1) immergée pour l'émission d'impulsions acoustiques (12) et plusieurs ensembles de réception et de signalisation (3), pourvus d'une source d'énergie électrique, **caractérisé en ce que** chaque ensemble de réception et de signalisation (3) comporte une base de temps (4), au moins trois capteurs acoustiques (5) non alignés, pour capter les impulsions de ladite source acoustique (1), une électronique de conditionnement et de numérisation (6) desdits signaux acoustiques, associée à chaque capteur acoustique (5), un processeur (7) agencé pour calculer en permanence la direction et la distance du par rapport à la source acoustique (1) à partir des impulsions acoustiques (12) captées par lesdits capteurs (5), et des moyens de signalisation (8), reliés audit processeur (7) pour fournir les indications calculées par ce processeur (7).

2. Dispositif selon la revendication 1, **caractérisé en ce** ledit processeur (7) comporte des moyens pour mesurer les écarts de temps d'arrivée ou de phase d'une même impulsion acoustique (12) provenant de ladite source acoustique (1) captée par chacun des capteurs (5) et des moyens pour calculer la direction dudit ensemble de réception et de signalisation (3) par rapport à ladite source acoustique (1) à partir desdits écarts de temps mesurés.

3. Dispositif selon l'une des revendications precédentes, **caractérisé en ce que** ledit processeur (7) comporte des moyens pour calculer l'écart de temps entre l'instant d'émission d'une impulsion acoustique (12) par ladite source acoustique (1) et l'instant de sa détection par ledit récepteur (3) et des moyens pour calculer la distance entre ledit récepteur (3) et ladite source acoustique (1) par multiplication dudit écart de temps calculé par la vitesse de propagation du son dans l'eau.

4. Dispositif selon l'une des revendications précédentes, **caractérisé en ce que** le processeur (7) de l'ensemble de réception et de signalisation (3) comporte des moyens de discrimination pour lui permettre de reconnaître les impulsions émises par une source acoustique (1) déterminée.

5. Dispositif selon l'une des revendications précédentes, **caractérisé en ce que** ladite source acoustique (1) présente des moyens (17) pour sélectionner une fréquence d'émission.

6. Dispositif selon l'une des revendications précédentes, **caractérisé en ce que** ladite source acoustique (1) comporte des moyens pour envoyer un signal spécifique susceptible d'être reconnu comme tel par ledit processeur (7) de façon à ce que lesdits moyens de signalisation (8) fournissent une indication visuelle et/ou sonore caractéristique dudit signal spécifique.

7. Dispositif selon l'une des revendications précédentes, **caractérisé en ce que** l'ensemble de réception et de signalisation (3) comporte les fonctions d'un ordinateur de plongée.
